# EUROPÄISCHE PATENTSCHRIFT

(11) **EP 1 378 448 B1**
(45) Veröffentlichungstag und Bekanntmachung des Hinweises auf die Patenterteilung: **08.12.2004**
(21) Anmeldenummer: 02015052.0
(22) Anmeldetag: 05.07.2002
(51) Int. Cl.: B64F 5/00, B66F 7/06, B66F 7/16

(54) **Vorrichtung zum Transportieren und Positionieren von Grossbauteilen**
Device for transporting and positioning large size structures
Dispositif pour le transport et le positionnement des grands structures

(43) Veröffentlichungstag der Anmeldung: 07.01.2004
(73) Patentinhaber: Hydro-Gerätebau GmbH & Co. KG Hebezeuge, D-77781 Biberach/Baden (DE)
(72) Erfinder: Huttegger, Barbara, 24536 Neumünster (DE)
(74) Vertreter: Maucher, Wolfgang, Dipl.-Ing.

(56) Entgegenhaltungen:
- EP-A- 0 569 914
- EP-A- 0 597 688
- DE-A- 4 209 812
- DE-A- 10 001 604
- GB-A- 1 227 099
- US-A- 3 752 331
- US-B1- 6 196 081
- US-B1- 6 240 799

## Beschreibung

Die Erfindung betrifft eine Vorrichtung zum Transportieren und Positionieren von Großbauteilen, insbesondere von Flugzeugtriebwerken, Flugzeugfahrwerken oder Tragflächen, mit einem Fahr- und Hubgestell, das einen unteren Trägerrahmen aufweist, an dem Räder sowie ein Hub- und Positioniermechanismus angebracht sind, der oben eine Lastaufnahme für das Großbauteil aufweist. Das Dokument GB-A-1 227 099 zeigt eine Vorrichtung gemäß dem Oberbegriff des Anspruchs 1.

Bei der Endmontage und bei der Wartung von Flugzeugen müssen Lasten im Bereich von mehreren Tonnen Gewicht feinfühlig um alle sechs Bewegungs-Freiheitsgrade positioniert werden. Solche Lasten sind beispielsweise Flugzeugfahrwerke und Flugzeugtriebwerke. Die Einbausituation im Flugzeug erfordert dabei die Einhaltung sehr spezifischer Montagefolgen, die je nach Einbauposition und Flugzeugtyp sehr unterschiedlich sein können.
Fahrwerke von Großraumflugzeugen sind üblicherweise an zwei Hauptbolzen mit der Flugzeugstruktur verbunden. Diese Hauptbolzen bilden die Drehachse, um die das Fahrwerk während des Fluges in den Fahrwerksschacht einschwenkt. Seitliche Streben verleihen dem Fahrwerk die nötige Seitenstabilität.
Für den Einbau wird das Fahrwerk in der Regel ohne Räder an den Achsstummeln auf einen Montagewagen aufgesetzt und mit Schellen befestigt. Der Montagewagen ermöglicht Hub-, Längs- und Querbewegungen, mit denen das Fahrwerk angehoben und im Fahrwerksschacht positioniert werden kann. Die Positionierbewegungen müssen dabei so feinfühlig bedient werden können, dass Verfahrbewegungen von unter 1mm realisierbar sind.
Mit diesen drei translatorischen Bewegungen sowie eventuellen Dreh- und Schwenkbewegungen wird das Fahrwerk positioniert, bis das erste Hauptlager des Fahrwerks mit der Aufnahmebohrung in der Flugzeugstruktur exakt deckungsgleich ist. Erst dann kann der erste Hauptbolzen eingeschoben und in die Rumpfstruktur eingebaut werden.
Das erste Hauptlager ist nun fest mit dem Flugzeug verbunden und bildet für den weiteren Einbau einen Fixpunkt. Ab diesem Zeitpunkt können und dürfen keine translatorischen Bewegungen mehr ausgeführt werden, da dies zu einer unzulässigen Belastung des Fahrwerks und der Flugzeugstruktur führen würde.
Um den zweiten Hauptbolzen zu positionieren und einzubauen, werden nun Dreh- und Schwenkbewegungen um den ersten Hauptlagerpunkt (Fixpunkt) ausgeführt. Dabei muss der Drehpunkt exakt im ersten Hauptlager liegen, da sonst wiederum unzulässige Belastungen auf das Fahrwerk und die Flugzeugstruktur wirken könnten.

Bei einigen Flugzeugtypen können Fahrwerke mit Hilfe eines Krans eingebaut werden. Dazu sind Öffnungen in der Tragfläche vorhanden, durch die spezielle Anschlagseile von oben durch den Flügel nach unten geführt werden. An diesen Anschlagseilen kann das Fahrwerk hochgezogen werden. Diese Kran-Montage ist jedoch nicht universell einsetzbar, da nur bestimmte Flugzeugtypen entsprechende Öffnungen im Flügel aufweisen. Zudem ist grundsätzlich der Einbau von Bugfahrwerken oder Zentralfahrwerken in Rumpfmitte zwischen den Flügeln nicht möglich. Darüber hinaus ist keine exakte Führung des Fahrwerks möglich, da es keine fest definierten Drehpunkte gibt und die geforderte präzise Positionierung mit Fahrwegen von zum Teil weniger als 1mm sind mit einem Kran meist nicht möglich. Zudem besteht aufgrund der beengten Platzverhältnisse im Fahrwerksschacht sowie einer möglichen Pendelbewegung der Last eine Gefährdung der Bedienpersonen bei der Montage.

Für die Fahrwerksmontage werden daher häufig auch mechanische Montagewagen eingesetzt. Diese Wagen verfügen über mehrere Stahlrahmen, die relativ zueinander beweglich montiert sind. Die Bewegung der Rahmen erfolgt beispielsweise durch Spindelantriebe, Schubstangen, Hubscheren etc. Die Rotationsbewegungen werden durch Rollen auf festen Kurvenbahnen realisiert, das heißt die Position des Drehpunkts für die Montage ist konstruktiv im Montagewagen festgelegt. Eine Verschiebung oder Korrektur dieses Drehpunktes ist nicht oder nur mit erheblichem Aufwand möglich.
Da die Drehpunkte bei den einzelnen Fahrwerkstypen sehr unterschiedlich sind, ist für jeden Fahrwerkstyp ein eigener, speziell dafür ausgelegter Montagewagen nötig. Die Montagewägen erfordern jeweils eine mechanisch sehr aufwendige Konstruktion, da für jede Bewegung ein eigener Verschieberahmen nötig ist und somit bis zu sechs bewegliche Rahmen in einem Gerät erforderlich sind. Diese Vielzahl an mechanischen Teilen führt auch zu einem hohen Wartungsaufwand.

Es besteht daher die Aufgabe, eine Vorrichtung der eingangs erwähnten Art zu schaffen, die flexible Positionierbewegungen ermöglicht und für verschiedenartige Großbauteile verwendbar ist.

Diese Aufgabe wird mit einer Vorrichtung gemäß Anspruch 1 gelöst.

Mit einer derart ausgebildeten Vorrichtung kann die Lastaufnahme unterschiedlichste Positionierwege durchlaufen, so dass ein und dieselbe Vorrichtung zum Einbau verschiedener Großbauteile einsetzbar ist. Somit ist beispielsweise im Flugzeugbau für den Einbau der verschiedenen Fahrwerke und der Triebwerke nur eine einzige Vorrichtung erforderlich, so dass die Anschaffungs- und Wartungskosten sowie die Lagerhaltungskosten zu deren Unterbringung bei Nichtbenutzung reduziert werden können.

Die Ausbildung der Stabkinematik als Hexapod mit sechs Hubelementen beziehungsweise als Stewart-Plattform ermöglicht einerseits Bewegungen in allen 6 Raumachsen, das heißt Linearbewegungen in X-, Y- und Z-Richtung sowie Rotation um diese Achsen, so dass universelle und präzise Positionierbewegungen möglich sind. Andererseits ist durch ein Hexapod beziehungsweise eine Stewart-Plattform aufgrund der günstigen Kraftverteilung ein sicheres und stabiles Halten und Stützen des Großbauteils in jeder Positionierlage gewährleistet.

Es ist jedoch auch möglich, dass die Stabkinematik zwei zueinander beabstandete Gruppen von jeweils drei Hubelementen aufweist, die insbesondere an zwei gegenüberliegenden Seiten des Fahr- und Hubgestells angeordnet sind. Dadurch lässt sich gegebenenfalls die Bauhöhe des Hub- und Positioniermechanismus in eingefahrenem Zustand reduzieren, ohne deren Tragkraft und Stabilität zu beeinträchtigen.
Gegebenenfalls können die einzelnen Hubelemente auch frei beziehungsweise jeweils mit Abstand zueinander positioniert werden.

Ein besonders einfacher mechanischer Aufbau der erfindungsgemäßen Vorrichtung ergibt sich, wenn die Hubelemente der Stabkinematik mit ihren unteren freien Enden jeweils an dem Trägerrahmen des Fahr- und Hubgestells und mit ihren oberen freien Enden an der Lastaufnahme angelenkt und zueinander beabstandet sind.

Die Lastaufnahme kann universelle Befestigungs- und Halteelemente zum Befestigen unterschiedlicher Großbauteile aufweisen.
Alternativ kann die Lastaufnahme lösbar an dem Hub- und Positioniermechanismus angebracht sein, so dass die Lastaufnahme zur Aufnahme eines bestimmten Großbauteils optimiert sein kann und jeweils eine geeignete Lastaufnahme an dem Hub- und Positioniermechanismus montiert wird.

Gegebenenfalls kann die Lastaufnahme einen an dem Hub- und Positioniermechanismus angebrachten Lastaufnahme-Rahmen aufweisen, der mit zumindest einem Lastaufnahme-Profilelement lösbar verbindbar ist. Hierbei muss für verschiedene Großbauteile nicht die komplette Lastaufnahme gewechselt werden, sondern nur einzelne Profilelemente, die zur Aufnahme des jeweiligen Großbauteils optimiert sind. Dadurch ist die Modifikation der Vorrichtung für verschiedene Großbauteile vereinfacht.

Ein weiterführender Erfindungsgedanke sieht vor, dass der Vorrichtung eine Steuereinheit zum Ansteuern der Stabkinematik und gegebenenfalls der Vertikalhubeinheit zugeordnet ist, und dass die Steuereinheit einen Speicher für vorgegebene oder vorgebbare Positionierwege aufweist. Über die Steuereinheit kann eine Positionierbewegung durchgeführt werden. Dabei kann eine manuelle Bedieneinheit zur Steuerung der Stabkinematik beziehungsweise der Vertikalhubeinheit vorgesehen sein, wobei die Bedieneinheit über Kabel oder kabellos an der Steuereinheit angebunden sein kann. Eine einmal durchlaufene Positionierbewegung kann in dem Speicher abgelegt und zu einem späteren Zeitpunkt abgerufen werden, um dieselbe Positionierbewegung exakt wiederholen zu können. Es ist auch denkbar, einen Bewegungsablauf durch einen Algorithmus zu programmieren und in den Speicher einzuspeisen, um diesen Bewegungsablauf bei Bedarf abzurufen und von der Stabkinematik durchführen zu lassen. Es können auch mehrere Bewegungsabläufe für unterschiedliche Großbauteile hinterlegt und bei Bedarf abgerufen werden. Dadurch können immer wiederkehrende Bewegungsabläufe schnell und präzise durchgeführt und somit die Einbauzeit für ein Großbauteil verkürzt werden.

Um unkontrollierte Bewegungen des Hub- und Positioniermechanismus und somit eine Gefährdung des Bedienpersonals zu verhindern, kann ein redundantes Meß- und Kontrollsystem verwendet werden. Hierzu ist es zweckmäßig, wenn den Hubelementen der Stabkinematik jeweils Wegmesssensoren und/oder Neigungssensoren zugeordnet sind, die mit der Steuereinheit verbunden sind und wenn die Steuereinheit zum Vergleich der Soll-Ist-Position der Stabkinematik anhand der Messwerte der Wegmesssensoren beziehungsweise der Neigungssensoren sowie der durch den vorgegebenen oder vorgebbaren Positionierweg bestimmten Positions-Sollwert ausgebildet ist. So kann beispielsweise mittels Neigungssensoren die tatsächliche Neigung der Lastaufnahme ermittelt und mit der theoretischen, aus den in der Steuereinheit abgespeicherten Weginformationen errechneten Neigung verglichen werden.

Fällt bei einem Hexapod auch nur eine der sechs Achsen aus, wird das ganze System instabil und fällt in sich zusammen. Daher muss jederzeit gewährleistet sein, dass das System sicher stehen bleibt, beispielsweise beim Bruch einer Hydraulikleitung. Hierzu ist es zweckmäßig, wenn die Hubelemente der Stabkinematik jeweils eine Arretierungseinrichtung zum Arretieren des jeweiligen Hubelements als Notfallsicherung aufweisen.
Fällt während einem Montagevorgang eine hydraulische Achse aus, muss diese ersetzt werden können. Dabei muss das System die Position, in der der Defekt auftrat, exakt halten. Um eine hydraulische Achse austauschen zu können, kann parallel dazu eine Hilfskonstruktion eingesetzt werden, die für die Zeit des Umbaus die Last und Funktion der defekten Achse übernimmt. Nach dem Austausch der defekten Achse kann die Steuerung exakt aus der vorgegebenen Position weiterarbeiten, ohne zuvor in eine Referenzposition zu fahren.

Um die Vorrichtung beispielsweise in einer Montagehalle einfach manövrieren zu können, ist es zweckmäßig, wenn die Räder lenkbar an dem Trägerrahmen angebracht sind.

Es ist zudem zweckmäßig, wenn zumindest zwei der Räder mit einer vorzugsweise einen Elektromotor oder einen Hydromotor aufweisenden Antriebseinheit in Antriebsverbindung stehen. Es ist somit keine separate Zugmaschine zum Verfahren der Vorrichtung erforderlich, was insbesondere in Montagehallen mit beschränktem Platz vorteilhaft ist und das Transportieren des Großbauteils zu dessen Montagestelle vereinfacht. Der Elektromotor oder das Aggregat des Hydromotors kann durch Batterien versorgt werden und es treten im Gegensatz zu einem Verbrennungsmotor keine schädlichen Emissionen auf, was insbesondere beim Einsatz der Vorrichtung in geschlossenen Montagehallen vorteilhaft ist.

Nachstehend sind Ausführungsbeispiele der erfindungsgemäßen Vorrichtung anhand der Zeichnungen näher erläutert.

Es zeigt:
- Fig. 1: eine Längsseitenansicht einer Vorrichtung mit einem Trägerrahmen und einer Lastaufnahme, zwischen denen ein Hexapod als Hub- und Positioniermechanismus angeordnet ist, mit einem auf der Lastaufnahme gehaltenem Flugzeugfahrwerk, wobei sich der Hub- und Positioniermechanismus in seiner unteren Ruhelage befindet,
- Fig. 2: eine Schmalseitenansicht der Vorrichtung aus Figur 1,
- Fig. 3: eine perspektivische Darstellung der Vorrichtung aus Figur 1,
- Fig. 4 bis Fig. 6: Darstellungen der Vorrichtung entsprechend den Figuren 1 bis 3, jedoch mit jeweils ausgefahrenem Hub- und Positioniermechanismus,
- Fig. 7: eine Längsseitenansicht einer Vorrichtung mit einer zwischen einem Trägerrahmen und einem Zwischenrahmen angeordneten Vertikalhubeinheit und einer zwischen dem Zwischenrahmen und einer Lastaufnahme angeordneten Hub- und Positioniermechanismus, mit einem auf der Lastaufnahme gehaltenem Flugzeugfahrwerk, wobei sich die Vertikalhubeinheit und der Hub- und Positioniermechanismus jeweils in ihrer unteren Ruhelage befinden,
- Fig. 8: eine Schmalseitenansicht der Vorrichtung aus Figur 7,
- Fig. 9: eine perspektivische Darstellung der Vorrichtung aus Figur 7,
- Fig. 10 bis Fig. 12: Darstellungen der Vorrichtung entsprechend den Figuren 7 bis 9, jedoch mit jeweils ausgefahrener Vertikalhubeinheit und ausgefahrenem Hub- und Positioniermechanismus.

Eine im ganzen mit 1 bezeichnete Vorrichtung zum Transportieren und Positionieren von Großbauteilen, insbesondere von Flugzeugtriebwerken, Flugzeugfahrwerken 2a, 2b oder Tragflächen, weist ein Fahr- und Hubgestell 3 mit einem unteren Trägerrahmen 4 auf, an dem Räder 5,5a sowie ein Hub- und Positioniermechanismus 6 angebracht sind. An dem Hub- und Positioniermechanismus 6 ist seinerseits eine Lastaufnahme 7 angebracht, auf der ein zu montierendes Großbauteil aufgesetzt werden kann.

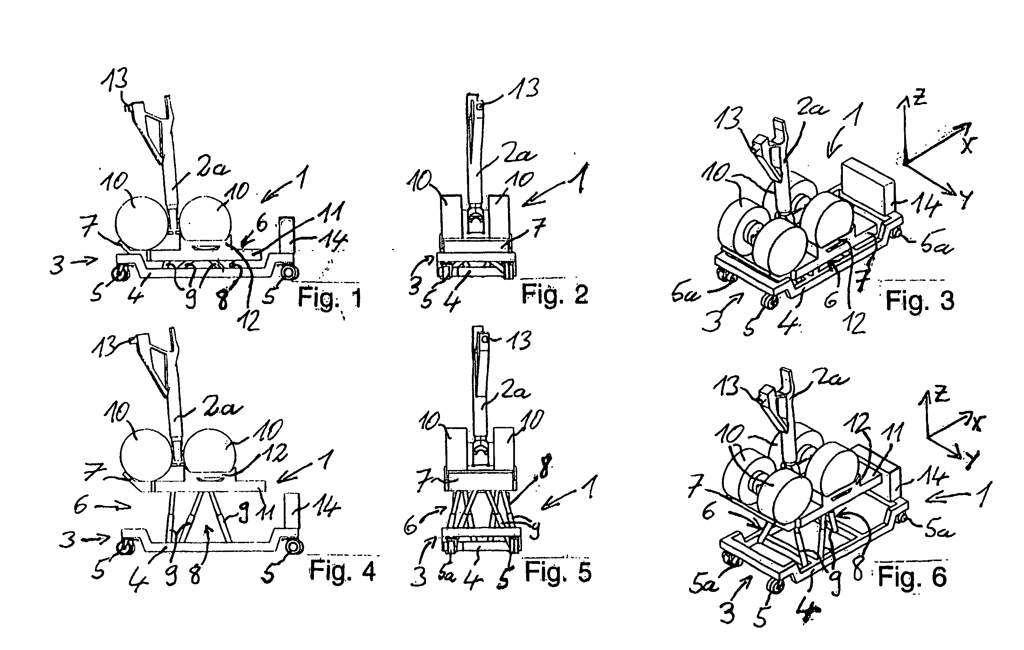

Die Figuren 1 bis 3 zeigen jeweils ein Ausführungsbeispiel der erfindungsgemäßen Vorrichtung in eingefahrenem Zustand des Hubund Positioniermechanismus 6. Dieser weist eine Stabkinematik 8 mit sechs Hubzylindern 9 auf, die als Hexapod beziehungsweise Stewart-Plattform angeordnet sind. Deutlicher zu Erkennen ist diese Anordnung in den Figuren 4 bis 6 mit jeweils ausgefahrenen Hubzylindern 9. Zwischen diesen Endpositionen gemäß Figuren 1 bis 3 beziehungsweise 4 bis 6 kann mit der Stabkinematik 8 jede beliebige Zwischenposition angefahren werden. Dabei sind sowohl Linearverschiebungen in allen drei Raumachsen (X, Y, Z, Figuren 3 und 6) als auch jeweils Rotationsbewegungen um diese Achsen möglich. Die besondere Konstruktion des Hexapod gewährleistet dabei ein sicheres und stabiles Halten des Flugzeugfahrwerks 2a in jeder ansteuerbaren Position.

Für den Einbau in einen Flugzeugrumpf wird das Fahrwerk 2a mit den bereits montierten Rädern 10 auf der Lastaufnahme 7 der Vorrichtung 1 aufgesetzt. Die Lastaufnahme weist dabei einen Lastaufnahme-Rahmen 11 auf, an dem Profilelemente 12 lösbar angebracht sind. Diese sind zur Aufnahme des Flugzeugfahrwerks 2a optimiert und können zur Montage anderer Großbauteile ausgetauscht werden.

Mittels der drehbar gelagerten Räder 5,5a kann die Vorrichtung 1 in jede Richtung gefahren und an den Montageplatz bewegt werden. Zwei der Räder 5a stehen dazu mit einem nicht näher dargestellten Elektromotor oder einem Hydromotor in Antriebsverbindung.

Mit der Hub- und Positioniereinrichtung 6 kann das Flugzeugfahrwerk 2a im in den Figuren nicht dargestellten Fahrwerksschacht positioniert werden. Dazu wird die Stabkinematik 8 ausgefahren und zunächst das erste Hauptlager 13 des Fahrwerks 2a mit einer Aufnahmebohrung in der Flugzeugstruktur zur Deckung gebracht. Das Hauptlager 13 und die Aufnahmebohrung werden anschließend mit einem Bolzen fixiert. Das erste Hauptlager 13 ist nun fest mit dem Flugzeug verbunden und bildet für den weiteren Einbau einen Fixpunkt. Ab diesem Zeitpunkt können und dürfen keine translatorischen Bewegungen mehr ausgeführt werden, da dies zu einer unzulässigen Belastung des Fahrwerks 2a und der Flugzeugstruktur führen würde.
Um den zweiten Hauptbolzen zu positionieren und einzubauen, werden mittels der Stabkinematik 8 Dreh- und Schwenkbewegungen um den ersten Hauptlagerpunkt (Fixpunkt) ausgeführt. Dabei muss der Drehpunkt exakt im ersten Hauptlager 13 liegen, da sonst wiederum unzulässige Belastungen auf das Fahrwerk 2a und die Fluzeugstruktur wirken könnten.
Über eine Steuereinheit 14 können die Bewegungen der Stabkinematik 8 präzise gesteuert werden, so dass die erforderliche Genauigkeit der Positionierbewegungen von zum Teil weniger als 1mm durchgeführt werden können.

Den einzelnen Hubzylindern 9 der Stabkinematik 8 sind jeweils nicht näher dargestellte Steuerventile, Absturzsicherungen, Hydraulikleitungen und integrierte Wegmesssysteme zugeordnet, um bei Auftreten einer Störung oder eines Defekts die Stabilität der Stabkinematik 8 sicherzustellen und unkontrollierte Bewegungen oder ein unkontrolliertes Zusammenfallen zu verhindern. Bei einer Fehlfunktion oder einem Defekt kann ein Hubzylinder 9 als komplette Einheit ausgetauscht werden.

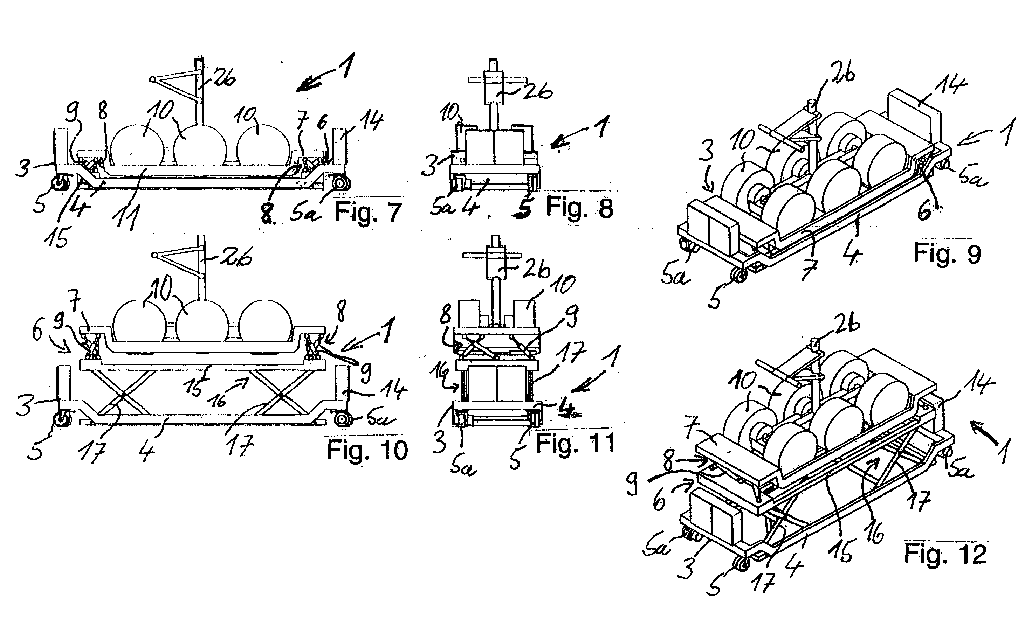

Die Figuren 7 bis 12 zeigen ein anderes Ausführungsbeispiel einer erfindungsgemäßen Vorrichtung 1. Dabei ist zwischen dem Trägerrahmen 4 und der Lastaufnahme 7 ein Zwischenrahmen 15 vorgesehen. Dieser Zwischenrahmen 15 ist über eine Vertikalhubeinheit 16 mit dem Trägerrahmen 4 und über einen Hub- und Positioniermechanismus 6 mit der Lastaufnahme verbunden. Mittels der Vertikalhubeinheit 16 kann eine Vorpositionierung des Flugzeugfahrwerks 2b in vertikaler Richtung durchgeführt werden, bevor die exakte Montagebewegung mit dem Hub- und Positioniermechanismus 6 erfolgt. Durch diese Aufteilung der Vertikalhubbewegung auf die Vertikalhubeinheit 16 einerseits und den Hubund Positioniermechanismus 6 andererseits kann gegebenenfalls die Bauhöhe der Vorrichtung 1 in eingefahrenem Zustand reduziert werden, was insbesondere in Montage-Umgebungen mit begrenzten Platzverhältnissen vorteilhaft sein kann.

Die Vertikalhubeinheit weist insgesamt vier Hubscheren 17 auf, wodurch eine günstige Verteilung der Gesamtlast erreicht wird. Zudem ermöglichen die Hubscheren 17 einen vergleichsweise großen maximalen Vertikalhub bei geringer vertikaler Ausdehnung in eingefahrenem Zustand (Figuren 7 bis 9).

Die Stabkinematik 8 weist gemäß den Figuren 7 bis 12 zwei zueinander beabstandete Gruppen von jeweils drei Hubzylindern 9 auf, die an zwei gegenüberliegenden Seiten des Fahr- und Hubgestells 3 angeordnet sind. Auch durch diese Maßnahme kann die Bauhöhe der Vorrichtung 1 in eingefahrenem Zustand reduziert werden. Die Stabilität und Funktionalität der Stabkinematik 8 ist gegenüber dem Ausführungsbeispiel mit einem Hexapod gemäß Figuren 1 bis 6 nicht eingeschränkt.

## Patentansprüche

1. Vorrichtung zum Transportieren und Positionieren von Großbauteilen, insbesondere von Flugzeugtriebwerken, Flugzeugfahrwerken (2a, 2b) oder Tragflächen, mit einem Fahr- und Hubgestell (3), das einen unteren Trägerrahmen (4) aufweist, an dem Räder (5, 5a) sowie ein Hub- und Positioniermechanismus (6) angebracht sind, der oben eine Lastaufnahme (7) für das Großbauteil sowie eine Stabkinematik (8) mit mehreren Hubzylindern (9), Hubspindeln oder dergleichen linearen Hubelementen aufweist, **dadurch gekennzeichnet, dass** die Stabkinematik (8) als Hexapod mit sechs Hubelementen beziehungsweise als Stewart-Plattform für eine Positionierung der Lastaufnahme (7) sowohl in linearen Achsen als auch in Rotationsachsen und für ein stabiles Stützen und Halten des Großbauteils in jeder Positionierstellung angeordnet und zwischen dem Trägerrahmen (4) und der Lastaufnahme (7) angelenkt sind.

2. Vorrichtung nach Anspruch 1, **dadurch gekennzeichnet, dass** die Stabkinematik (8) zwei zueinander beabstandete Gruppen von jeweils drei Hubelementen aufweist, die insbesondere an zwei gegenüberliegenden Seiten des Fahr- und Hubgestells (3) angeordnet sind.

3. Vorrichtung nach einem der Ansprüche 1 bis 2, **dadurch gekennzeichnet, dass** die Hubelemente der Stabkinematik (8) mit ihren unteren freien Enden jeweils an dem Trägerrahmen (4) des Fahr- und Hubgestells (3) und mit ihren oberen freien Enden an der Lastaufnahme (7) angelenkt und zueinander beabstandet sind.

4. Vorrichtung nach einem der Ansprüche 1 bis 3, **dadurch gekennzeichnet, dass** die Lastaufnahme (7) lösbar an dem Hubund Positioniermechanismus (6) angebracht ist.

5. Vorrichtung nach einem der Ansprüche 1 bis 4, **dadurch gekennzeichnet, dass** die Lastaufnahme (7) einen an dem Hubund Positioniermechanismus (6) angebrachten Lastaufnahme-Rahmen (11) aufweist, der mit zumindest einem Lastaufnahme-Profilelement (12) lösbar verbindbar ist.

6. Vorrichtung nach einem der Ansprüche 1 bis 5, **dadurch gekennzeichnet, dass** der Vorrichtung (1) eine Steuereinheit (14) zum Ansteuern der Stabkinematik (8) und gegebenenfalls der Vertikalhubeinheit (16) zugeordnet ist, und dass die Steuereinheit (14) einen Speicher für vorgegebene oder vorgebbare Positionierwege aufweist.

7. Vorrichtung nach einem der Ansprüche 1 bis 6, **dadurch gekennzeichnet, dass** den Hubelementen der Stabkinematik (8) jeweils Wegmesssensoren und/oder Neigungssensoren zugeordnet sind, die mit der Steuereinheit (14) verbunden sind und dass die Steuereinheit (14) zum Vergleich der Soll-Ist-Position der Stabkinematik (8) anhand der Messwerte der Wegmesssensoren beziehungsweise der Neigungssensoren sowie der durch den vorgegebenen oder vorgebbaren Positionierweg bestimmten Positions-Sollwert ausgebildet ist.

8. Vorrichtung nach einem der Ansprüche 1 bis 7, **dadurch gekennzeichnet, dass** die Hubelemente der Stabkinematik (8) jeweils eine Arretierungseinrichtung zum Arretieren des jeweiligen Hubelements als Notfallsicherung aufweisen.

9. Vorrichtung nach einem der Ansprüche 1 bis 8, **dadurch gekennzeichnet, dass** die Räder (5, 5a) lenkbar an dem Trägerrahmen (4) angebracht sind.

10. Vorrichtung nach einem der Ansprüche 1 bis 9, **dadurch gekennzeichnet, dass** zumindest zwei der Räder (5a) mit einer vorzugsweise einen Elektromotor oder einen Hydromotor aufweisenden Antriebseinheit in Antriebsverbindung stehen.

## Claims

1. Apparatus for transporting and positioning large components, particularly aircraft engines, aircraft landing gear (2a, 2b) or aerofoils, having a driving and lifting chassis (3) which comprises a lower carrier frame (4) on which are mounted wheels (5, 5a) and a lifting and positioning mechanism (6) which comprises at the top a load holder (7) for the large component and a kinematic rod arrangement (8) having a plurality of lifting cylinders (9), lifting spindles or similar linear lifting elements, **characterised in that** the kinematic rod arrangement (8) is arranged as a hexapod with six lifting elements or as a Stewart platform for positioning the load holder (7) along both linear axes and rotation axes and for stably supporting and securing the large component in each selected position and is articulated between the carrier frame (4) and the load holder (7).

2. Apparatus according to claim 1, **characterised in that** the lifting elements of the kinematic rod arrangement (8) are articulated with their free lower ends on the carrier frame (4) of the driving and lifting chassis (3) and with their free upper ends on the load holder (7) and are spaced apart from one another.

3. Apparatus according to claim 1 or 2, **characterised in that** the kinematic rod arrangement (8) comprises two spaced-apart groups of three lifting elements in each case, which are mounted, in particular, on two opposite sides of the driving and lifting chassis (3).

4. Apparatus according to one of claims 1 to 3, **characterised in that** the load holder (7) is releasably mounted on the lifting and positioning mechanism (6).

5. Apparatus according to one of claims 1 to 4, **characterised in that** the load holder (7) comprises a load holding frame (11) mounted on the lifting and positioning mechanism (6), this frame being releasably connectable to at least one load holding profile element (12).

6. Apparatus according to one of claims 1 to 5, **characterised in that** the apparatus (1) is associated with a control unit (14) for actuating the kinematic rod arrangement (8) and optionally the vertical lifting unit (16), and **in that** the control unit (14) has a memory for preselected or preselectable positioning pathways.

7. Apparatus according to one of claims 1 to 6, **characterised in that** the lifting elements of the kinematic rod arrangement (8) are each associated with travel measuring sensors and/or tilt sensors which are connected to the control unit (14) and **in that** the control unit (14) is adapted to compare the intended and actual positions of the kinematic rod arrangement (8) using the measurements obtained by the travel measuring sensors or the tilt sensors and the intended position determined by the preselected or preselectable positioning pathway.

8. Apparatus according to one of claims 1 to 7, **characterised in that** the lifting elements of the kinematic rod arrangement (8) each have a locking device for locking the lifting element in question, as an emergency safety mechanism.

9. Apparatus according to one of claims 1 to 8, **characterised in that** the wheels (5, 5a) are steerably mounted on the carrier frame (4).

10. Apparatus according to one of claims 1 to 9, **characterised in that** at least two of the wheels (5a) are drivably connected to a drive unit preferably comprising an electric motor or a hydraulic motor.

## Revendications

1. Dispositif pour le transport et la mise en place de structures de grandes dimensions en particulier des réacteurs d'avion, des trains d'atterrissage d'avion (2a, 2b) ou d'autres voilures du type comprenant un châssis de déplacement et de soulèvement (3) comportant un cadre porteur inférieur (4) sur lequel sont montées des roues (5, 5a) ainsi qu'un mécanisme de soulèvement et de mise en place (6) au-dessus d'un récepteur de charge (7) pour la grande structure ainsi qu'un système cinématique à leviers (8) équipé de plusieurs cylindres de levage (9), pivots de levage ou éléments de levage linéaires analogues, **caractérisé en ce que** le système cinématique à leviers (8) est agencé sous forme d'un hexapode à six éléments de levage ou d'une plateforme de Steward pour un positionnement du récepteur de charges (7) ainsi que d'axes linéaires constituant également des axes de rotation et disposés dans chaque emplacement de positionnement pour un appui et un maintien stable de la grande structure, et embiellés entre le cadre porteur (4) et le récepteur de charges (7).

2. Dispositif selon la revendication 1, **caractérisé en ce que** les éléments de levage du système cinématique à leviers (8) sont embiellés par chacune de leurs extrémités libres inférieures au cadre porteur (4) du châssis de déplacement et de soulèvement (3) et par leurs extrémités libres supérieures au récepteur de charges (7) et sont espacés les uns des autres.

3. Système selon la revendication 1 ou 2, **caractérisé en ce que** le système cinématique à leviers (8) présente deux groupes espacés l'un de l'autre comportant chacun trois éléments de levage qui sont disposés en particulier sur deux côtés opposés du châssis de déplacement et de soulèvement (3).

4. Dispositif selon l'une quelconque des revendications 1 à 3, **caractérisé en ce que** le récepteur de charges (7) est monté détachable sur le mécanisme de soulèvement et de mise en place (6).

5. Dispositif selon l'une quelconque des revendications 1 à 4, **caractérisé en ce que** le récepteur de charges (7) présente un cadre de réception de charges (11) monté sur le mécanisme de soulèvement et de mise en place (6) et qui peut être réuni de façon séparable à au moins un élément profilé de réception de charges (12).

6. Dispositif selon l'une quelconque des revendications 1 à 5,c aractérisé en ce que, au dispositif (1) est associée une unité de commande (14) destinée à la commande du système cinématique à leviers (18) et éventuellement à l'unité de levage vertical (16) et en ce que l'unité de commande (14) possède une réserve pour un trajet de positionnement possible ou prévisible.

7. Dispositif selon l'une quelconque des revendications 1 à 6, **caractérisé en ce que**, à chacun des éléments de levage du système cinématique à leviers (8) sont associés des détecteurs de longueur de trajet et/ou des détecteurs d'inclinaison qui sont reliés à l'unité de commande (14) et **en ce que** l'unité de commande (14), en vue de la comparaison de la position fixée par les normes du système cinématique à leviers (8), par rapport aux valeurs détectées par les détecteurs de longueur de trajet ou des détecteurs d'inclinaison ainsi que en fonction du trajet de positionnement prévu ou prévisible, prend une valeur de position conforme aux normes déterminées.

8. Dispositif selon l'une quelconque des revendications 1 à 7, **caractérisé en ce que** chacun des éléments de levage du système cinématique à leviers (8) présente un système d'arrêt destiné à arrêter chacun des éléments de levage en cas d'urgence.

9. Dispositif selon l'une quelconque des revendications 1 à 8, **caractérisée en ce que** les roues (5, 5a) sont montées orientables sur le cadre porteur (4).

10. Dispositif selon l'une quelconque des revendications 1 à 9, **caractérisé en ce que** au moins deux des roues (5a) sont reliées positivement avec une unité de commande comportant de préférence un moteur électrique ou un moteur hydraulique.
